Europäisches Patentamt

(19) European Patent Office

Office européen des brevets

(11) Numéro de publication: **0 075 508**
**B1**

(12) **FASCICULE DE BREVET EUROPEEN**

(45) Date de publication du fascicule du brevet:
**19.02.86**

(21) Numéro de dépôt: **82401657.0**

(22) Date de dépôt: **13.09.82**

(51) Int. Cl.⁴: **A 01 G 7/00,** C 05 F 1/00

(54) **Procédé pour augmenter le rendement céréalier et produit d'absorption foliaire pour sa mise en oeuvre.**

(30) Priorité: **14.09.81 FR 8117307**

(43) Date de publication de la demande:
**30.03.83 Bulletin 83/13**

(45) Mention de la délivrance du brevet:
**19.02.86 Bulletin 86/8**

(84) Etats contractants désignés:
**AT BE CH DE FR GB IT LI LU NL SE**

(56) Documents cités:
**FR - A - 1 525 297**
**FR - A - 2 188 951**

(73) Titulaire: **LABORATOIRE D'ACHAT POUR L'AGRICULTURE - LAPA, F-08450 Raucourt (FR)**
Titulaire: **S.I.A.P.A. - Societa Italo Americana Prodotti Antiparassitari S.p.A., Via Pontano 44, Naples (IT)**

(72) Inventeur: **Goffin, Joseph, 50 route de Namur, B-5050 Eghezee (BE)**

(74) Mandataire: **Lepeudry-Gautherat, Thérèse et al, CABINET ARMENGAUD JEUNE CASANOVA et LEPEUDRY 23 boulevard de Strasbourg, F-75010 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé pour augmenter le rendement céréalier ainsi qu'un produit d'absorption foliaire pour sa mise en œuvre.

Parmi les produits d'absorption foliaire actuellement connus, il en existe un qui est obtenu par hydrolyse de matières organiques naturelles riches en protéines telles que par exemple des déchets d'abattoir. Cette hydrolyse est poussée jusqu'à la libération partielle d'acides aminés dont ces protéines sont constituées. Le résultat de cette hydrolyse se présente sous l'aspect d'un liquide brun, moyennement visqueux, soluble dans l'eau et contenant environ 14% en poids d'azote sous forme organique; il comprend les 20 acides aminés essentiels, dont certains à l'état de trace en fonction du produit de départ, libres ou associés en peptides ou en polypeptiques solubles, ainsi que des oligo-éléments.

Jusqu'à présent un tel produit à base d'acides aminés était conseillé comme engrais foliaire organique par exemple sur des plantes sarclées telles que la betterave sucrière lorsque celle-ci couvre d'un quart à un tiers de la surface, du sol, la pomme de terre au stade du début de la tuberculisation, ainsi que sur le maïs au stade de l'ébauche florale femelle. Par contre, son emploi sur céréales (blé, orge, avoine) a toujours été déconseillé car aucune augmentation de rendement n'a été observée jusqu'à maintenant.

Aussi, un but de la présente invention est-il un procédé pour augmenter le rendement céréalier qui utilise un produit d'absorption foliaire.

Un objet de l'invention est un produit d'absorption foliaire pour la mise en œuvre de ce procédé.

Ce but et cet objet, ainsi que d'autres qui apparaîtront par la suite, sont atteints par le procédé pour augmenter le rendement céréalier selon la présente invention qui consiste en la pulvérisation d'un produit d'absorption foliaire sur les céréales lorsque celle-ci sont au stade de début de tallage.

De préférence, on dilue avec de l'eau ce produits jusqu'à obtenir une concentration comprise entre 0,4 et 2,5% en volume avantageusement entre 0,6 et 1,5% en volume, et on pulvérise le produit ainsi dilué aux doses normales comprises entre 200 et 1000 litres par hectare. Ceci correspond à une pulvérisation de 2 à 6 litres par hectare du produit selon la présente invention et de préférence de 3 à 4 litres par hectare.

Le produit d'absorption foliaire selon la présente invention comporte les vingt acides aminés essentiels, libres ou associés à des peptides ou à des polypeptides solubles et a une teneur en azote organique d'environ 14% en poids.

Avantageusement, un tel produit est obtenu par hydrolyse de matières organiques naturelles riches en protéines.

De préférence, ce produit est obtenu par hydrolyse de déchets d'abattoir.

La description qui va suivre et qui ne présente aucun caractère limitatif, permettra à l'homme de métier de mieux comprendre comment le procédé selon l'invention peut être mis en œuvre, ainsi que les caractéristiques et avantages du produit utilisé dans ce procédé.

Le produit d'absorption foliaire selon la présente invention comporte les vingt acides aminés essentiels, libres ou associés en peptides ou en polypeptides solubles et a une teneur en azote organique d'environ 14% en poids. Dans le tableau I ci-dessous, ont été indiquées les valeurs minima et maxima en poids % de ce produit en acides aminés essentiels dans le cas où il est obtenu par hydrolyse de déchets d'abattoir.

Tableau I

| Acide aminé libre | Minimum | % en poids | Maxima |
|---|---|---|---|
| acide aspartique | 0,3 | | 0,5 |
| asparagine | | traces | |
| thréonine | 0,02 | | 0,03 |
| sérine | 0,15 | | 0,20 |
| acide glutamique | 0,7 | | 0,8 |
| proline | 6,0 | | 7,0 |
| glycine | 3,5 | | 7,5 |
| alanine | 2,5 | | 6,0 |
| valine | | traces | |
| cystéine | traces | | 0,5 |
| tryptophane | | traces | |
| méthionine | 0,2 | | 0,4 |
| homocystéine | | traces | |
| isoleucine | 0,1 | | 0,4 |
| leucine | 0,03 | | 0,25 |
| tyrosine | trace | | 0,07 |
| phénylalanine | 0,02 | | 0,18 |
| lysine | 0,3 | | 1,05 |
| histidine | trace | | |
| arginine | 0,05 | | 0,30 |

Dans le tableau II ci-dessous, on a regroupé les caractéristiques physiques ou chimiques de ce même produit et on a indiqué à titre indicatif une composition minérale de ce produit.

Tableau II
Densité: 1,26
pH (en solution dans eau 1/10): 6,2
teneur en matière sèche: 920 à 940 g/l
teneur en cendre: 45 à 55 g/l
Eau: 320 à 340 g/l
Azote total: 170 à 180 g/l.
Solubilité dans l'eau: complète.
Composition minérale:

| | | |
|---|---|---|
| $Na_2O$: | 25 | g |
| $K_2O$: | 1 | g |
| CaO: | 10 | g |
| MgO: | 2,5 | g |
| $FeO_3$: | 640 | mg |
| ZnO: | 60 | mg |
| CuO: | 600 | mg |
| $B_2O_3$: | 650 | mg |
| MnO: | trace | |

Il a été trouvé que contrairement aux prescriptions, un tel produit peut avoir une action favorable sur les céréales lorsque sa pulvérisation est effectuée en début de tallage.

Dans le cycle du développement d'une céréale, on distingue trois périodes: période végétative, période de reproduction, et période de maturation. Chacune d'elles comprend un nombre variable de phases. Ainsi la première période ou période végétative comporte trois phases: phase germination-levée, phase levée-tallage et phase tallage-montaison.

La phase levée-tallage débute lorsque la première feuille encore enroulée perce le coléoptile. Puis elle se déroule, lorsqu'elle est à demi-développée, elle laisse voir la pointe de la seconde feuille dont la base est engainée dans le coléoptile jaunissant; la plante possède alors cinq ou six racines primaires. Plus tard, les deux premières feuilles à demi-développées laissent voir la pointe de la troisième; on peut alors distinguer par transparence, à travers le coléoptile, un filament terminé par un renflement qui va se gonfler et former le plateau de tallage qui se renfle en même temps qu'aparaît la quatrième feuille. C'est à ce stade dit du début de tallage où la plante à quatre ou cinq feuilles, qu'il y a lieu de pulvériser le produit selon l'invention. En effet c'est à ce stade qu'apparaissent les deux premières talles ainsi que l'ébauche florale.

Le produit d'absorption foliaire selon l'invention doit être dilué dans de l'eau de façon à obtenir une concentration en volume comprise entre 0,4 et 2,5% et de préférence entre 0,6 et 1,5% en ce produit ce qui correspond à une pulvérisation de 2 à 6 litres par hectare et de préférence de 3 à 4 litres par hectare aux doses normales de pulvérisation comprises entre 200 et 1000 litres par hectare. La pulvérisation du produit dilué peut être effectuée avec tous types de pulvérisateurs connus en agriculture.

L'exemple suivant permettra de mieux comprendre l'importance du moment auquel la pulvérisation est faite.

EXEMPLE:
Dans cinq stations et selon la méthode des carrés on a préparé des parcelles témoins à des parcelles ayant été traitées par pulvérisation du produit selon l'invention à la dose de 3 litres par hectare environ, au début du tallage, c'est-à-dire au stade 1 ou 2 talles, 15 jours après ce moment et 30 jours après. On a regroupé dans le tableau III les résultats obtenus sur les divers de la variété Fidel.

Tableau III

| | Témoin | Traitement effectué | | |
|---|---|---|---|---|
| | | Début de tallage | 15 jours après | 30 jours après |
| Nombre moyen de plants par m² | 201 | 201 | 202 | 205 |
| Nombre moyen d'épis par m² | 440 | 488 | 462 | 465 |
| Nombre d'épis par plant | 2,19 | 2,43 | 2,29 | 2,27 |
| % d'épis par plant | 100 | 111 | 105 | 104 |
| Rendement en % | 100 | 106 | 98,5 | 101 |

D'après ce tableau il apparaît qu'une augmentation du rendement céréalier est obtenue de façon caractéristique lorsque l'on pulvérise le produit d'absorption foliaire obtenu par hydrolyse de matières organiques riches en protéines sur une céréale en début de tallage.

On peut également noter que le nombre d'épis par plant est accru de façon significative, plus de 10% dans cet exemple. Plus généralement cette augmentation est comprise entre 6 et 15%.

## Revendications

1. Procédé pour augmenter le rendement céréalier par pulvérisation d'un produit d'absorption foliaire obtenu par hydrolyse de matières organiques naturelles riches en protéines, caractérisé en ce qu'il est pulvérisé sur la céréale au stade du début de tallage.

2. Procédé selon la revendication 1, caractérisé par le fait que l'on pulvérise ledit produit à raison de 2 à 6 litres par hectare après l'avoir dilué avec de l'eau.

3. Procédé selon la revendication 2, caractérisé par le fait que l'on pulvérise ledit produit à raison de 3 à 4 litres par hectare après l'avoir dilué avec de l'eau.

4. Produit d'absorption foliaire pour la mise en œuvre du procédé selon l'une quelconque des revendications 1 à 3, caractérisé par le fait qu'il comporte les 20 acides aminés essentiels, libres ou associés à des peptides ou à des polypeptides solubles et qu'il a une teneur en azote organique d'environ 14% en poids.

## Claims

1. Process for increasing cereal yield by spraying with a foliar absorption product obtained by hydrolysis of natural organic materials rich in proteins, characterised in that the product is sprayed on to the cereal at the stage of the beginning of tiller formation.

2. Process according to claim 1 characterised by the fact that the said product is sprayed at a rate of 2 to 6 litres per hectare after having been diluted with water.

3. Process according to claim 2 characterised by the fact that the said product is sprayed at a rate of 3 to 4 litres per hectare after having been diluted with water.

4. Foliar absorption product for use in the process according to any one of claims 1 to 3 characterised by the fact that it comprises the 20 essential amino acids, free or associated with peptides or with soluble polypeptides and that it has an organic nitrogen content of about 14% by weight.

## Patentansprüche

1. Verfahren zum Steigern des Ertrages von Getreide durch Zerstäuben eines Blattabsorptionsproduktes, das durch Hydrolyse von natürlichem organischem Material, das reich an Proteinen ist, erhalten wird, dadurch gekennzeichnet, dass es auf die im Stadium beginnender Bestokkung befindliche Getreidepflanzen zerstäubt wird.

2. Verfahren nach Anspruch 1, dadurch gekennzeichnet, dass man das gennante Produkt in einer Menge von zwei bis sechs Litern pro Hektar versprüht, nachdem es zuvor mit Wasser verdünnt wurde.

3. Verfahren nach Anspruch 2, dadurch gekennzeichnet, dass man das genannte Produkt in einer Menge von drei bis vier Litern pro Hektar versprüht, nachdem es zuvor mit Wasser verdünnt wurde.

4. Blattabsorptionsprodukt für die Durchführung des Verfahrens nach einem der Ansprüche 1 bis 3, dadurch gekennzeichnet, dass es die zwanzig wesentlichen Aminosäuren in freier Form oder in Verbindung mit Peptiden oder löslichen Polypeptiden enthält und dass es einen Gehalt an organischem Stickstoff von ungefähr vierzehn Gewichts-Prozenten aufweist.